(19) Europäisches Patentamt
European Patent Office
Office européen des brevets

(11) Publication number: **0 472 913 B1**

(12) **EUROPEAN PATENT SPECIFICATION**

(45) Date of publication of patent specification: **11.10.95**

(51) Int. Cl.[6]: **C08L 81/02**, //(C08L81/02, 71:12,77:00)

(21) Application number: **91112487.3**

(22) Date of filing: **25.07.91**

(54) **Poly(phenylene sulfide) resin compositions.**

(30) Priority: **15.08.90 JP 214277/90**

(43) Date of publication of application:
**04.03.92 Bulletin 92/10**

(45) Publication of the grant of the patent:
**11.10.95 Bulletin 95/41**

(84) Designated Contracting States:
**DE ES FR GB IT NL**

(56) References cited:
**EP-A- 0 368 413**
**EP-A- 0 412 572**

**DATABASE WPIL Week 8503, 13 March 1985 Derwent Publications Ltd., London, GB;AN 85-016279/03**

**DATABASE WPIL Week 9135, 30 October 1991 Derwent Publications Ltd., London, GB;AN 91-256221/35**

(73) Proprietor: **GE PLASTICS JAPAN LIMITED**
**7-2, 3-Chome,**
**Nihonbashi-Honcho**
**Chuo-Ku,**
**Tokyo (JP)**

(72) Inventor: **Kodaira, Tetsuji**
**Tsukamoto-Haitsu 301,**
**13-1, Tamachi**
**Moka City,**
**Tochigi Prefecture (JP)**
Inventor: **Ishida, Hiromi**
**3-147, Takase-cho**
**Moka City,**
**Tochigi Prefecture (JP)**
Inventor: **Kabaya, Hidekazu**
**472-5, Yagioka**
**Moka City,**
**Tochigi Prefecture (JP)**

(74) Representative: **Pratt, Richard Wilson et al**
**London Patent Operation**
**G.E. Technical Services Co. Inc.**
**Essex House**
**12/13 Essex Street**
**London WC2R 3AA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 472 913 B1

## Description

The present invention relates to poly(phenylene sulfide) resin compositions, in particular to improved resin compositions which do not show the brittleness typical of poly(phenylene sulfides) (hereinafter abbreviated PPS) when subjected to impact.

PPS resins have excellent heat resistance, flame retardance, chemical resistance, and stiffness, which make them extremely useful as engineering plastics, but they have the drawback of brittleness when subjected to impact. There have therefore been efforts to develop resin compositions which exhibit the desirable properties of poly(phenylene sulfides) while overcoming this drawback.

For example, compositions of poly(phenylene ethers) (hereinafter abbreviated PPE) and poly(phenylene sulfides), in which poly(phenylene sulfides) are added to improve the moldability and flame retardance of the poly(phenylene ethers), are described in Japanese Early Patent Disclosure Publication No. 50-156561.

Poly(phenylene ether) resin compositions containing both poly(phenylene sulfides) and polyamides are described in Japanese Early Patent Disclosure Publication No. 53-69255. These seek to overcome the brittleness of poly(phenylene sulfides).

In addition, blends of poly(phenylene sulfides) and poly(phenylene ethers) to which polyamides and epoxy resins are added in order to improve the compatibility of poly(phenylene sulfides) with poly(phenylene ethers) are described in Japanese Early Patent Disclosure Publication No. 59-213758.

The present invention is one in which poly(phenylene sulfides) are compounded with poly(phenylene ethers) and polyamides in order to overcome their brittleness. But because poly(phenylene sulfides) and poly(phenylene ethers) have inherently poor compatibility, when they are simply blended the resulting resin is brittle, and its appearance is not very good. When polyamide and epoxy resins are added to improve the compatibility of poly(phenylene sulfides) and poly(phenylene ethers), a reaction occurs between the epoxy resins, polyamides, and poly(phenylene sulfides), and this causes a problem in that the melt flow characteristics of the composition are not constant. When poly(phenylene sulfides) and polyamides are compounded they show poor compatibility, so there is little improvement of the brittleness of poly(phenylene sulfides), and an additional problem of phase separation tends to occur.

The object of the present invention is blend poly(phenylene sulfides), poly(phenylene ethers), and polyamides without these problems, and thus provide poly(phenylene sulfide) resin compositions with high impact resistance.

The present inventors have discovered that this object can be accomplished with compositions of poly(phenylene sulfides), poly(phenylene ethers), polyamides, and compatibilizers, provided that certain polyamides are used.

The present invention thus provides poly(phenylene sulfide) resin compositions consisting mainly of

(a) 40-90 wt% poly(phenylene sulfides),
(b) 5-55 wt% poly(phenylene ethers),
(c) 5-55 wt% polyamides, and
(d) 0.01-10 wt. parts compatibilizers per 100 wt. parts of components (a), (b), and (c),

in which the polyamides are copolymers of nylon 6 and nylon 12, and/or nylon 6/36.

The poly(phenylene sulfides) used in the present invention are preferably polymers comprising at least 70 mole% repeating units represented by the formula

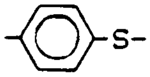

since these polymers give compositions with excellent properties. The poly(phenylene sulfides) may be prepared by polymerization of *p*-dichlorobenzene in the presence of sulfur and sodium carbonate, by polymerization of *p*-dichlorobenzene in a polar solvent in the presence of sodium sulfide, sodium hydrosulfide and sodium hydroxide, or hydrogen sulfide and sodium hydroxide, by condensation of *p*-chlorothiophenol, etc. A suitable method is the reaction of sodium sulfide with *p*-dichlorobenzene in an amide solvent such as *N*-methylpyrrolidone or dimethylacetamide, or a sulfone solvent such as sulfolane. Alkali hydroxides are preferably added, and the alkali metal salt of a carboxylic acid or sulfonic acid may be added to control the degree of polymerization. The polymer may also contain up to 30 mole%, preferably not more than 10 mole%, comonomers which form meta or ortho linkages

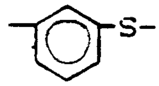 or 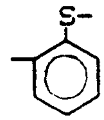 ,

ether linkages

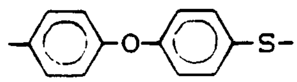 ,

sulfone linkages

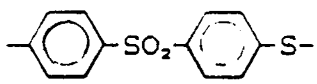 ,

biphenyl linkages

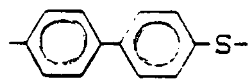 ,

substituted phenylene sulfide linkages

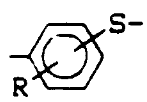

(where R rep resents an alkyl, nitro, phenyl, alkoxy, carboxy, or metal carboxylate group), or trifunctional phenylene sulfide linkages

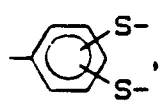 ,

so long as these copolymerized components do not substantially affect the crystallinity of the polymer. When trifunctional or higher functional phenyl, biphenyl, or naphthyl sulfides are used for copolymerization, the comonomer content should be 3 mole% or less, preferably not more than 1 mole%.

Poly(phenylene sulfides) of this type can be synthesized by any of various methods, for example, (1) the reaction of a halogenated aromatic compound with an alkali sulfide (see U.S. Patent No. 2,513,188, Japanese Patent Publication No. 44-27671, Japanese Patent Publication No. 45-3368), (2) the condensation reaction of a thiophenol in the presence of an alkali catalyst or a copper salt (see U.S. Patent No. 3,274,165, U.K. Patent No. 1,160,660), or (3) the condensation reaction of an aromatic compound with sulfur chloride in the presence of a Lewis acid catalyst (see Japanese Patent Publication No. 46-27255, Belgian Patent No. 29437).

Poly(phenylene sulfides) are presently being marketed by Phillips Petroleum, Toso Sastil, Tohprene, and Kureha Chemical. There are various grades, with differing crosslink densities and viscosities. For the purposes of the present invention, poly(phenylene sulfides) with little crosslinking in their structure are preferred.

The poly(phenylene ethers) used as component (b) are polymers represented by general formula (A)

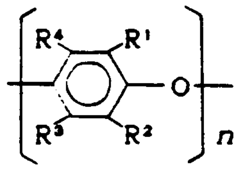

(A)

(where $R^1$, $R^2$, $R^3$, and $R^4$ are hydrogen atoms or monovalent substituents having no tertiary $\alpha$ carbons, selected from halogen atoms, alkyl groups, alkoxy groups, and haloalkyl or haloalkoxy groups having at least two carbons between the halogen atom and the phenyl ring; and *n* is an integer representing the degree of polymerization). They may be either homopolymers or copolymers combining two or more repeating units of this type. In preferred examples, $R^1$ and $R^2$ are $C_{1-4}$ alkyl groups, while $R^3$ and $R^4$ are hydrogen atoms or $C_{1-4}$ alkyl groups. Examples include poly(2,6-dimethyl-1,4-phenylene ether), poly(2,6-diethyl-1,4-phenylene ether), poly(2-methyl-6-ethyl-1,4-phenylene ether), poly(2-methyl-6-propyl-1,4-phenylene ether), poly(2,6-dipropyl-1,4-phenylene ether), and poly(2-ethyl-6-propyl-1,4-phenylene ether). PPE copolymers include poly(phenylene ethers) having repeating units like those above along with units derived from trialkyl phenols such as 2,3,6-trimethylphenol. They may also be copolymers formed by grafting styrenic monomers onto poly(phenylene ethers). Among the styrenic monomers which may be used to make styrene-grafted poly(phenylene ethers) are styrene, $\alpha$-methylstyrene, vinyltoluene, and chlorostyrene.

The polyamides used as component (c) are copolymers of nylon 6 and nylon 12, and/or nylon 6/36. In this specification, the term "copolymers of nylon 6 and nylon 12" refers to copolymers formed from $\epsilon$-caprolactam and $\omega$-laurolactam or 12-aminododecanoic acid, which may be block or random copolymers. They preferably contain 0.02-50 moles of nylon 12 units per mole of nylon 6 units.

Resin compositions in accordance with the present invention contain poly(phenylene sulfides), poly(phenylene ethers), and polyamides in the following proportions. There should be 40-90 wt% (preferably 50-80 wt%) poly(phenylene sulfides), 5-55 wt% (preferably 10-40 wt%) poly(phenylene ethers), and 5-55 wt% (preferably 10-40 wt%) polyamides. If a composition has less than 40 wt% poly(phenylene sulfides), it will not show the full stiffness, heat resistance, and flame retardance characteristic of PPS resins. If the poly(phenylene ether) content is less than 5 wt%, the properties of the composition will be significantly affected by moisture absorption by the polyamides, and the heat resistance and stiffness will be lowered. If the polyamide content is below 5 wt%, the appearance of the material will be poor, and the brittleness of poly(phenylene sulfides) will not be sufficiently overcome.

In addition to the components described above, resin compositions in accordance with the present invention also contain compatibilizers (d). These may be any of the known agents for improving the compatibility of poly(phenylene sulfides) with poly(phenylene ethers) and polyamides. Preferred examples of such compatibilizers include

(a) citric acid, malic acid, agaricic acid, or derivatives thereof,

(b) compounds having both (i) carbon-carbon double or triple bonds, and (ii) carboxylic acid, acid anhydride, amide, imide, carboxylate ester, epoxy, amino, or hydroxy groups, or

(c) compounds having carboxylic acid or acid anhydride groups and acid halide groups.

The use of (a) citric acid, malic acid, agaricic acid, or derivatives thereof is described in Japanese Early Patent Disclosure Publication No. 61-502195. Any of the compounds represented by the general formula in that publication may be used in the present invention, although the compounds listed above are particularly preferred. The derivatives may be esters, amides, anhydrides, hydrates, or salts of these acids. Examples of esters include citric acid acetyl ester, and mono- and distearyl citrates. Examples of amides include *N,N′*-diethyl amides, *N,N′*-dipropyl amides, *n*-phenyl amides, *N*-dodecyl amides, and *N,N′*-didodecyl amides of citric acid, as well as *N*-dodecyl amides of malic acid. Examples of salts include calcium malate, calcium citrate, calcium malate [sic], and potassium citrate.

Compatibilizing agents of type (b) are described in Japanese Early Patent Disclosure Publication No. 56-49753. Examples include maleic anhydride, maleic acid, fumaric acid, maleimide, maleic acid hydrazide, reaction products of maleic acid with diamines, such as

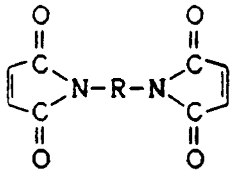

or

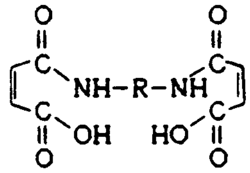

(where R represents an aliphatic or aromatic group), methylnadic anhydride, dichloromaleic anhydride, and maleamide, as well as natural oils such as soybean oil, tung oil, castor oil, linseed oil, hempseed oil, cottonseed oil, sesame oil, peanut oil, camellia oil, olive oil, palm oil, other vegetable oils, or sardine oil; epoxidized natural oils such as epoxidized soybean oil; unsaturated carboxylic acids such as acrylic acid, butenoic acid, crotonic acid, vinylacetic acid, methacrylic acid, pentenoic acid, angelic acid, tiglic acid, 2-pentenoic acid, 3-pentenoic acid, α-ethylacrylic acid, β-methylcrotonic acid, 4-pentenoic acid, 2-hexenoic acid, 2-methyl-2-pentenoic acid, 3-methyl-2-pentenoic acid, α-ethylcrotonic acid, 2,2-dimethyl-3-butenoic acid, 2-heptenoic acid, 2-octenoic acid, 4-decenoic acid, 9-undecenoic acid, 10-undecenoic acid, 4-dodecenoic acid, 5-dodecenoic acid, 4-tetradecenoic acid, 9-tetradecenoic acid, 9-hexadecenoic acid, 2-octadecenoic acid, 9-octadecenoic acid, eicosenoic acid, docosenoic acid, erucic acid, tetracosenoic acid, mycolipenic acid, 2,4-pentadienoic acid, 2,4-hexadienoic acid, 2,4-dodecadienoic acid, 9,12-hexadecadienoic acid, 9,12-octadecadienoic acid, hexadecatrienoic acid, linolic acid, linoleic acid, octadecatrienoic acid, eicosadienoic acid, eicosatrienoic acid, eicosatetraenoic acid, ricinolic acid, eleostearic acid, oleic acid, eicosapentaenoic acid, ersinic acid, docosadienoic acid, docosatrienoic acid, docosatetraenoic acid, docosapentaenoic acid, tetracosenoic acid, hexacosenoic acid, hexacosadienoic acid, octacosenoic acid, and tetracosenoic acid; esters, amides, and anhydrides of such unsaturated carboxylic acids; unsaturated alcohols such as allyl alcohol, crotyl alcohol, methyl vinyl carbinol, allyl carbinol, methyl propenyl carbinol, 4-penten-1-ol, 10-undecen-1-ol, propargyl alcohol, 1,4-pentadiene-3-ol, 1,4-hexadiene-3-ol, 3,5-hexadiene-2-ol, 2,4-hexadiene-1-ol, alcohols represented by the general formulas $C_nH_{2n-5}OH$, $C_nH_{2n-7}OH$, or $C_nH_{2n-9}OH$ (where *n* is a positive integer), 3-butene-1,2-diol, 2,5-dimethyl-3-hexene-2,5-diol, 1,5-hexadiene-3,4-diol, and 2,6-octadiene-4,5-diol; unsaturated amines in which the OH groups of the above unsaturated alcohols are replaced with $NH_2$ groups; adducts of maleic anhydride or phenols with oligomeric polymers (e.g., average molecular weight of about 500 to 10,000) of compounds such as butadiene or isoprene; or similar polymers treated to introduce amino, carboxy, hydroxy, or epoxy groups. Compounds of type (b) may also contain two or more (i) groups and two or more (ii) groups (which may be identical or different).

As a particular example of a compound of type (c), trimellitic anhydride chloride is recited in Japanese Early Patent Disclosure Publication No. 62-50056.

Other examples of compatibilizers (d) include unsaturated monomers and/or polymers having epoxy groups and/or oxazolinyl groups.

Examples of unsaturated monomers having epoxy groups and/or oxazolinyl groups include the following.

Preferred unsaturated monomers having epoxy groups include glycidyl methacrylate (hereinafter abbreviated GMA), glycidyl acrylate, vinyl glycidyl ether, glycidyl ethers of hydroxyalkyl (meth)acrylates, poly(alkylene glycol) (meth)acrylate glycidyl ethers, and glycidyl itaconate.

Preferred unsaturated monomers having oxazolinyl groups are represented by the general formula

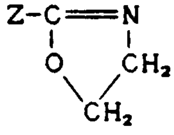

where Z is a group containing a polymerizable double bond. Preferred substituent groups Z are the following.

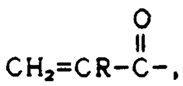, 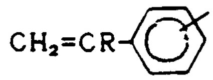, 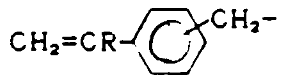,

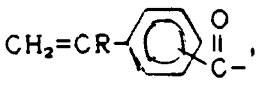, 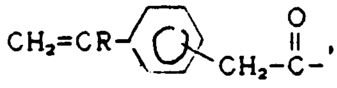, and 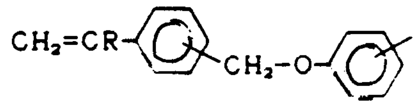

where R is a hydrogen atom or an alkyl or alkoxy group having 1 to 6 carbon atoms, such as a methyl, isopropyl, *n*-propyl, or butyl group.

Particularly preferred compounds are vinyl oxazolines represented by the general formula

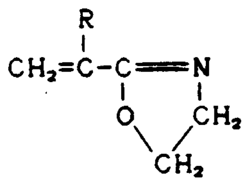

where R is as defined above, preferably a hydrogen atom or a methyl group.

Polymers having epoxy groups or oxazolinyl groups include homopolymers of such unsaturated monomers, copolymers of two or more such unsaturated monomers, and copolymers of such monomers with other unsaturated monomers, such as:

styrene (hereinafter abbreviated St) or other aromatic vinyl monomers;

acrylonitrile or other cyano vinyl monomers;

vinyl acetate, acrylic acid (salts), methacrylic acid (salts), acrylate esters, methacrylate esters, maleic acid (anhydride), maleate esters, 2-norbornene-5,6-dicarboxylic acid (anhydride), or other unsaturated carboxylic acids or derivatives thereof;

ethylene, propylene, 1-butene, 1-pentene, 4-methyl-1-pentene, 1-hexene, 1-octene, 1-decene, 1-tetradecene, 1-hexadecene, 1-octadecene, 1-eicosene, or other α-olefins; or

butadiene, isoprene, 1,4-hexadiene, 5-ethylidene-2-norbornene, 5-vinyl-2-norbornene, or other dienes.

Examples of copolymers thus include GMA/St, GMA/St/MMA (methyl methacrylate)/MA, GMA/St/acrylonitrile, GMA/MMA/acrylonitrile, GMA/MMA, GMA/MMA/St, vinyloxazoline/St, vinyloxazoline/MMA, ethylene/GMA, and ethylene/vinyl acetate/GMA. (Of course copolymers other than these may also be used in accordance with the present invention. )

The amount of compatibilizer used as component (d) is generally in the range of 0.01 to 10 wt. parts (preferably 0.1 to 3 wt. parts) per 100 wt. parts of (a) poly(phenylene sulfides), (b) poly(phenylene ethers), and (c) polyamides. If less than this amount is used, the intended effect will not be obtained, while if more than this is used, the heat resistance of products fabricated from the composition will be greatly reduced.

For better impact strength, compositions in accordance with the present invention may also be blended with up to 20 wt. parts rubbers per 100 wt. parts of poly(phenylene sulfides), poly(phenylene ethers), and polyamides.

The rubbers may be natural or synthetic polymers which are elastomeric at room temperature. Examples include natural rubber, butadiene polymers, butadiene-styrene copolymers (including random copolymers, block copolymers, and graft copolymers), isoprene polymers, chlorobutadiene polymers, butadiene-acrylonitrile copolymers, isobutylene polymers, isobutylene-butadiene copolymers, isobutylene-isoprene copolymers, acrylate ester copolymers, ethylene-propylene copolymers, ethylene-propylene-diene copolymers, Thiokol rubbers, polysulfide rubbers, polyurethane rubbers, polyether rubbers [e.g., poly-(propylene oxide)], and epichlorohydrin rubbers.

Resin compositions in accordance with the present invention may also contain other resins or additives introduced during compounding or fabrication in amounts which do not impair the desired properties of the composition. Such additives may include pigments, dyes, reinforceing agents (glass fibers, carbon fibers, etc.), fillers (carbon black, silica, titanium dioxide, etc.), heat stabilizers, antioxidants, light stabilizers, lubricants, release agents, crystal nucleating agents, plasticizers, flame retardants, flow enhancers, and/or antistatic agents.

Compositions in accordance with the present invention are preferably prepared by melt kneading techniques. Small amounts of solvents may be used, although they are generally not necessary. The equipment used may be a Banbury mixer, mixing rolls, or a kneader, operating batchwise or continuously. There is no particular limitation on the order in which the components are mixed. The poly(phenylene sulfide), poly(phenylene ether), polyamide, and compatibilizer premixed with the compatibilizer, then with the polyamide, and finally with the poly(phenylene sulfide); or the poly(phenylene ether), polyamide, and compatibilizer may be premixed, then combined with the poly(phenylene sulfide).

(Examples)

The present invention will now be described more concretely by means of some examples. In these examples, all parts are parts by weight.

The poly(phenylene sulfide) used was Tohprene T4 (trade mark of Tohprene Ltd.).

The poly(phenylene ether) used was Noryl (trade name of Nippon GE Plastics).

The following polyamides were used.

PA-A: copolymer of nylon 6 and nylon 12 (monomer mole ratio 80:20, trade name 7024B, from Ube Industries, $[NH_2] = 5.3 \times 10^{-5}$ eq/g, $[COOH] = 5.6 \times 10^{-5}$ eq/g)

PA-B: copolymer of nylon 6 and nylon 12 (monomer mole ratio 60:40, trade name 7028B, from Ube Industries, $[NH_2] = 2.8 \times 10^{-5}$ eq/g, $[COOH] = 5.9 \times 10^{-5}$ eq/g)

PA-C: Nylon 6/36 (trade named Priadit 2054, from Unichema Co.)

PA-D: Nylon 6 (from Ube Industries, $[NH_2] = 8.4 \times 10^{-5}$ eq/g, $[COOH] = 1.8 \times 10^{-5}$ eq/g, molecular weight 13,000)

The compatibilizers used were RPS 1005 (trade name for a styrene copolymer with 5 wt% oxazoline derivative monomer, from Nippon Shokubai Kagaku Ltd.), and citric acid.

In addition, Kraton G 1651 [trade name for partially hydrogenated styrene-butadiene block copolymer (SEBS) from Shell Chemical] was used as an optional rubber component.

Examples 1-3, Comparisons 1-2

The amounts (wt. parts) of the poly(phenylene ether), citric acid, and Kraton G 1651 listed in the table were kneaded in a twin-screw extruder (screw diameter 50 mm) set at 320 °C, and pelletized. The pellets were mixed with one of the polyamides, kneaded in the same extruder set at 280 °C, and pelletized. The resulting pellets were in turn mixed with the poly(phenylene sulfide), kneaded in the same extruder set at 320 °C, and pelletized. Those pellets were dried, then injection molded at 320 °C into 50×50×3-mm specimens, which were tested for impact resistance. The test was performed at room temperature, using a rapid-load impact tester (from Shimazu Seisakusho Ltd.), with a striker diameter of 12.7 mm, a striker velocity of 5 m/sec, and a hole diameter of 25.4 mm. The results are listed in the Table.

Comparison 2

The amounts (wt. parts) listed in the table of the poly(phenylene ether) and Kraton G 1651 were kneaded in a twin-screw extruder (screw diameter 50 mm) set at 320 °C, pelletized, mixed with the poly-(phenylene sulfide) and RPS 1005, kneaded in the twin-screw extruder at 320 °C, and pelletized. The resulting pellets were injection molded as in Examples 1-3, and tested for impact resistance under the same conditions as in Examples 1-3. The results are also listed in the table.

| | Example | | | Comparison | |
|---|---|---|---|---|---|
| | 1 | 2 | 3 | 1 | 2 |
| (a) Poly(phenylene sulfide) | 50 | 50 | 50 | 50 | 50 |
| (b) Poly(phenylene ether) | 15 | 15 | 15 | 15 | 25 |
| (c) Polyamide | | | | | |
| PA-A | 20 | | | | |
| PA-B | | 20 | | | |
| PA-C | | | 20 | | |
| PA-D | | | | 20 | |
| (d) Compatibilizer | | | | | |
| RPS 1005 | | | | | 10 |
| Citric Acid | 0.35 | 0.35 | 0.35 | 0.35 | |
| Optional Components | | | | | |
| Kraton G 1651 | 15 | 15 | 15 | 15 | 15 |
| Impact Resistance Test Fracture Energy (kg-cm) | 430 | 400 | 390 | 280 | 80 |

The present invention has made it possible to improve the impact resistance of resin compositions containing poly(phenylene sulfides), poly(phenylene ethers), and polyamides.

## Claims

**1.** Poly(phenylene sulfide) resin compositions consisting mainly of
(a) 40-90 wt% poly(phenylene sulfides),
(b) 5-55 wt% poly(phenylene ethers),
(c) 5-55 wt% polyamides, and
(d) 0.01-10 wt. parts compatibilizers per 100 wt. parts of components (a), (b), and (c),
characterized in that the polyamides are copolymers of nylon 6 and nylon 12, and/or nylon 6/36.

**2.** Resin compositions as in claim 1, in which the compatibilizers (d) are one or more compounds selected from:
(a) citric acid, malic acid, agaricic acid, or derivatives thereof,
(b) compounds having both (i) carbon-carbon double or triple bonds, and (ii) carboxylic acid, acid anhydride, amide, imide, carboxylate ester, epoxy, amino, or hydroxy groups, or
(c) compounds having carboxylic acid or acid anhydride groups and acid halide groups.

**3.** Resin compositions as in claim 1, in which the compatibilizers (d) are unsaturated monomers and/or polymers having epoxy groups and/or oxazolinyl groups.

## Patentansprüche

**1.** Poly(phenylensulfid)harzzusammensetzung bestehend in der Hauptsache aus
(a) 40-90 Gewichts-% poly(phenylensulfiden)
(b) 5-55 Gewichts-% Poly(phenylenethern),
(c) 5-55 Gewichts-% Polyamiden, und
(d) 0,01-10 Gew.-teilen verträglich machender Mittel pro 100 Gewichtsteile der Komponenten (a), (b) und (c),
dadurch gekennzeichnet, daß die Polyamide Copolymere von Nylon 6 und Nylon 12, und/oder Nylon

6/36 sind.

2. Harzzusammensetzungen nach Anspruch 1, in welchen die verträglichmachenden Mittel (d) ein oder mehrere Verbindungen sind, ausgewählt aus
   (a) Zitronensäure, Äpfelsäure, Agaricinsäure oder Derivaten derselben,
   (b) Verbindungen mit sowohl (i) Kohlenstoff-Kohlenstoff-Doppel- oder Dreifachbindungen, und (ii) Carbonsäure, Säureanhydrid, -amid, -imid, Carbonsäureester, Epoxy-, Amino- oder Hydroxy-Gruppen, oder
   (c) Verbindungen mit Carbonsäure- oder Säureanhydrid-Gruppen und Säurehalogenid-Gruppen.

3. Harzzusammensetzungen nach Anspruch 1, in welchen die verträglichmachenden Verbindungen
   (d) ungesättigte Monomere und/oder Polymere mit Expoxy-Gruppen und/oder Oxazolinyl-Gruppen sind.

**Revendications**

1. Compositions de résine de poly(sulfure de phénylène) constituées principalement de
   (a) 40 - 90 % en poids de poly(sulfure de phénylène),
   (b) 5 - 55 % en poids de poly(phénylène éther),
   (c) 5 - 55 % en poids de polyamide et
   (d) 0,01 à 10 % en poids d'agents compatibilisants pour 100 parties en poids de la somme de (a), (b) et (c),

   caractérisées en ce que les polyamides sont des copolymère de nylon 6 et de nylon 12 et/ou de nylon 6/36.

2. Compositions de résine conformes à la revendication 1 dans laquelle les agents compatibilisants (d) sont un ou plusieurs composés choisis parmi:
   (a) l'acide citrique, l'acide malique, l'acide agaricique, ou des dérivés de ceux-ci,
   (b) les composés comportant à la fois (i) une double ou triple liaison carbone-carbone et (ii) une fonction acide carboxylique, anhydride d'acide, amide, imide, ester d'acide carboxylique, époxyde, amino ou hydroxyle, ou
   (c) les composés comportant des fonctions d'acide carboxylique ou d'anhydride d'acide et halogénure d'acide.

3. Compositions de résine conforme à la revendication 1 dans lesquelles les agents compatibilisants (d) sont des monomères insaturés et/ou des polymères ayant des groupes époxyde et/ou des groupes oxazolinyle.